# EUROPÄISCHE PATENTANMELDUNG

(11) **EP 2 402 243 A1**
(43) Veröffentlichungstag der Anmeldung: **04.01.2012**
(21) Anmeldenummer: 10168183.1
(22) Anmeldetag: 01.07.2010
(51) Int. Cl.: B62M 3/08

(54) **Biokonformes Pedal**

(71) Anmelder: BioConform GmbH, 07749 Jena (DE)
(72) Erfinder: Töpfer, Jörg, 07749, Jena (DE)
(74) Vertreter: Hasler, Erich

(57) **Zusammenfassung**

Pedal 10 mit einer Aufnahme 15 für eine erste Achse zur drehbaren Verbindung mit einer Tretkurbel 11 und einer Fussauflage, wobei die Fussauflage mittels eines Koppelgetriebes mit der Aufnahme 15 verbunden ist, so dass der Fuß, sich während des Fahrradfahrens bedarfgerecht positionieren und komplexe mehrachsige Bewegungen ausführen kann, die sich an den funktionellen biomechanischen Erfordernissen der menschlichen Beine orientiert. Das biokonforme Pedal ist aufgrund seiner Ausführung besonders geeignet als Fahrradpedal oder zu ähnlichem Einsatz, mit besonderen gesundheitlichen und sportlichen Vorteilen für den Nutzer.

## Beschreibung

Die Erfindung betrifft ein Pedal mit einer beweglichen Fussaufnahme, insbesondere für Fahrräder.

### Stand der Technik

Aus der DE 3 218 290 ist ein Pedaltrainingsgerät bekannt, welches zusätzlich zur Drehbewegung der Pedale eine Pedalbewegung um eine weitere Achse erlaubt, die senkrecht zur Pedalachse des am Ende eines Kurbelarmes sitzenden Pedals verläuft. Dadurch wird eine freie Schwenkbewegung in einem Winkel zur Längserstreckung der Pedale ermöglicht. Das Pedaltrainmgsgerät ist in seiner Konstruktion einfach gehalten, ein Drehpunkt des Pedals unterhalb des Fussballens eines Benutzers und die daraus resultierende Drehbewegung des Vorderfußes um eine Kugel, bei der die Ferse schwingt, wie er beim genannten Trainingsgerät vorgesehen ist, muss aus biomechanischer Sicht allerdings als belastend für das Kniegelenk und die Sprunggelenke betrachtet werden.

Die EP 1 761 428 offenbart eine funktionelle Tretmechanik bei welcher die Schuhauflage auf dem Support derart beweglich angeordnet ist, dass eine Schwenkbewegung in einem Winkel zur Längsachse der Schuhauftrittsfläche ermöglicht ist. Biomechanisch vorteilhaft schwingt hierbei der Vorfuß um einen Drehpunkt in der Ferse. Als Längsachse wird jene Achse verstanden, welche in der Längserstreckung eines auf der Schuhauftrittsfläche angeordneten Fusses verläuft. Gemäss einer Ausführungsvariante ist ein Kegelstumpf mit einer kurvenförmigen Nut in seiner Manteloberfläche an der Pedalachse drehfest angeordnet In diese Nut greift ein Bolzen ein, welcher starr mit der Schuhauftrittsfläche verbunden ist. Diese Konstruktion sorgt dafür, dass die Schuhauftrittsfläche des Pedals in der von Ihr aufgespannten Ebene eine zwangsgeführte Schwenkbewegung und eine zusätzliche zwangsgeführte Kippbewegung aus der Ebene der Schwenkbewegung heraus vollführt. Die Schuhauftrittsfläche stützt sich dabei direkt auf dem Kegelstumpf ab. Die Schuhauflage erstreckt sich über die ganze Länge des Fusses. Im Fersenbereich der Schuhauftrittsfläche befindet sich ein Drehpunkt, der den Ballenbereich der Schuhauftrittsfläche in ihrer Schwenkbewegung führt. Die beschriebene Tretmechanik ist relativ sperrig und aufwändig in der Konstruktion. Auch treten im Betrieb relativ hohe Reibe- und Gleitverluste auf. Bei der beschriebenen Ausführungsvariante ist es zudem nicht möglich, die Schuhauftrittsfläche auf den Fussballenbereich zu beschränken. Auch erlaubt es die offenbarte funktionelle Tretmechanik nicht, den Kegelstumpf von Druckkräften zu befreien, die vom Antrieb durch Muskelkraft herrühren.

### Aufgabe der Erfindung

Es ist deshalb Aufgabe der vorliegenden Erfindung, ein Pedal bereitzustellen, welches die eingangs erwähnten Nachteile nicht aufweist. Insbesondere ist es ein Ziel, ein biokonformes Pedal vorzuschlagen, welches technisch sowie biomechanisch effizienter und vor allem verschmutzungsunempfindlich ist. Darüber hinaus soll die Pedalbewegung möglichst reibungsarm durchführbar sein. Das komplexe Bewegungsmuster der Beine, das sich in der Fußbewegung abbilden soll, so, wie es beim Radfahren naturgemäß gefordert ist, bestehend aus dem achsengerechten Zusammenspiel von Beugung und Streckung (Flexion/Extension), Abspreizen und Anziehen(Abduktion/Adduktion) und Einwärtsdrehung/Auswärtsdrehung (Innenrotation/Außenrotation) in allen beteiligten Beingelenke, soll erstmals annähernd biomechanisch optimal über die Pedalbeweglichkeit realisiert werden. Weitere Vorteile und Ziele der vorliegenden Erfindung ergeben sich aus der nachfolgenden Beschreibung.

### Darstellung der Erfindung

Die oben genannte Aufgabe wird gelöst durch einen Pedalkörper bzw. ein Pedal gemäss Anspruch 1. Es handelt sich dabei insbesondere um ein Pedal bzw. einen Pedalkörper mit einer Basis und einer Fussauflage; wobei die Fussauflage mittels eines Koppelgetriebes mit der Basis verbunden ist.

Die Basis dient zur Verbindung des Pedals mit dem Gerät (z.B. einem Fahrrad), mit welchem das Pedal verwendet wird. Zu diesem Zweck weist die Basis mit Vorteil einen Kopplungs- bzw. Verbindungsmechanismus auf. Es handelt sich bei der genannten Basis mit Vorteil um eine Aufnahme für eine Achse. Bei der Achse handelt es sich bevorzugt um eine Pedalachse, vorzugsweise zur drehbaren Verbindung mit einer oder mehreren Tretkurbeln.

Wenn in diesem Dokument von einer (ersten) Aufnahme die Rede ist, soll neben der genannten Aufnahme vorzugsweise auch allgemein die Basis offenbart sein.

Das beschriebene Pedal ist geeignet zur Verwendung bei einer Vielzahl von Geräten, beispielsweise bei Fahrrädern, Ergometern, Steppern oder sonstigen Fortbewegungsmitteln, Therapie-, Rehabilitations- und/oder Fitnessgeräten. Es handelt sich dabei vorzugsweise um Geräte, welche durch Beugen und Strecken der Beine bedient und/oder angetrieben werden. Das Bein muss dabei nicht notwendigerweise auf einer Kreisbahn bewegt werden, wie dies beim Fahrrad der Fall ist. Auch lineare oder sonstige Bewegungen sind möglich. Entsprechend kann das Pedal auch statt mit einem oder mehreren Tretkurbelarmen über einen anderen Mechanismus mit dem Gerät verbunden sein.

Wie weiter unten beschrieben, kann durch die Wahl dieses Getriebes unter Anderem die Grösse des Pedals reduziert, eine verringerte Verschmutzungsempfindlichkeit, eine optimierte Biomechanik und eine verbesserte Anpassung an unterschiedliche Fussgrössen erreicht werden.

Es ist bekannt, dass der menschliche Körper aufgrund der komplexen Struktur und Funktion der Beine und Füsse nicht kompatibel mit starr ablaufenden Bewegungen ist. In hohem Maße spielen diese Aspekte eine Rolle beim Fahrradfahren, einer Bewegungs- und Belastungsform mit vielfältigen adaptiven Anforderungen in Bezug auf die Abstimmung zwischen vom Radbau vorgegebenen konstruktiven Elementen, die Zwangsbewegungen und Zwangshaltungen abfordern, und dem menschlichen Körper und dessen Kinematik, Statik und Funktionskonzept. Diese stehen sich in erheblichem Maße konträr gegenüber. Ausser dem positiven Konditions-und Muskeltrainingseffekt wirkt das Fahrrad, insbesondere das Fahrradpedal, in seinen Bau -und Funktionselementen erheblich destruktiv auf den menschlichen Stützapparat.

Stand der Wissenschaft ist die Erkenntnis, dass die großen menschlichen Gelenke in einem mehrachsigen Zusammenspiel miteinander mechanisch verkoppelt sind. Dies ist zwar bekannt, wird aber technisch nicht respektiert und nicht umgesetzt.

Auch das Knie- sowie das obere und untere Sprungelenk stellen Koppelgelenkmechanismen dar, die eine funktions- und achsengerechte Belastung verlangen. Gründe hierfür liegen unter anderem an der Morphologie der beteiligten Gelenke, sowie der funktionellen Anatomie der entsprechenden Muskeln und Bänder. Bekannte biomechanische Mechanismen sind beispielsweise das Kardangelenk der hinteren Fußwurzel und die tibio-femorale Rotation des Kniegelenks.

Die für letztgenannte Kinematik geforderte funktionen anatomische Drehachse liegt im Bereich der Fußwurzel.

Die Fussauflage sollte also mit Vorteil in einer Ebene, die parallel zur Pedalachse liegt, schwenkbar ausgestaltet sein. Dadurch wird eine Schwenkbewegung des Vorfusses, dessen Drehachse im Bereich der Sprunggelenke liegt, durchführbar. Diese Schwenkbarkeit der Schuhauflage trägt massgeblich dazu bei, den bekannten Beanspruchungsschäden entgegenzuwirken. Sie entspricht u.a. der benannten tibio-femoralen Rotation des Kniegelenkes (Femorotibiales Gelenk).

Es ist also vorteilhaft, wenn ein Pedal eine natürliche Bewegung des Fusses zulässt. Im optimalen Fall gehören dazu neben der oben erwähnten tibio-femoralen Rotationsbewegung im Kniegelenk auch die komplexen Bewegungsmuster aus Inversion und Eversion des Fußes, die charakteristisch auch Maulschellenbewegung genannt wird. Inversion beschreibt das Aufwärtskanten der inneren Fußseite, die durch das Hochziehen des Fußrückens begleitet wird. Gegenspiel dazu ist die Eversion. Sie beschreibt das Aufwärtskanten der äußeren Fußseite, die durch das Absenken des Fußes in Richtung Fußsohle begleitet wird. Das funktionelle Zusammenspiel von Beugung und Streckung in den Beingelenken, der tibio-femoraler Rotation im Kniegelenk sowie der Inversion und Eversion in der Fußwurzel hat eine komplexe Schwenk-Schaukelbewegung des Fußes mit Achsenschnittpunken im Fußwurzelbereich zur Folge.

Diese komplexe Bewegung des Fußes via Pedal wird über das biokonforme Pedal mit beweglicher Fussaufnahme erreicht.

Die Umsetzung einer beweglichen Fussaufnahme in Form eines Koppelgetriebes hat den wesentlichen Vorteil, dass dieser Mechanismus - im Gegensatz zu bekannten Schienen-Schlitten-Systemen - sehr verschmutzungsresistent ist, was bei einer Anwendung im Freien von herausragender Bedeutung ist.

Es existieren einige Fahrradpedale, welche eine Drehung des Fusses zulassen, wobei aber meist der Drehradius zu klein ist oder der Drehmittelpunkt nicht im Bereich des Sprunggelenkes liegt, sondern biomechanisch nachteilig im Bereich des Zehenballens. Ausführungsformen, die einen physischen Drehpunkt im Fersenbereich vorsehen, sind demgegenüber klobig. Mit einem Koppelgetriebe lässt sich eine Dreh- bzw. Schwenkbewegung mit ausreichendem Radius realisieren, ohne dass im Fersenbereich eine physische Drehachse vorhanden sein muss. Das Pedal kann also wesentlich kompakter, d.h. kürzer und leichter konstruiert werden.

Das Koppelgetriebe definiert mit Vorteil eine kreisförmige oder elliptische Bewegungsbahn der Fussauflage (vorzugsweise relativ zur Aufnahme), wobei der Mittelpunkt des Kreises oder der Ellipse mit Vorteil in Fusslängsrichtung auf der hinteren Seite von bzw. im Abstand hinter der Aufnahme und/oder Pedalachse, angeordnet ist. Mit anderen Worten ist das Koppelgetriebe so ausgelegt bzw. konstruiert, dass es oben genannte Kreisbahn bzw. elliptische Bahn vorgibt. Der Kreisradius beträgt vorzugsweise 10 bis 30 cm, insbesondere 12 bis 20 cm und besonders bevorzugt 15 bis 18 cm. Da die Bewegungsbahn vorzugsweise nur einen Teil eines Kreises (Kreisbogen) bzw. einen Teil einer Ellipse darstellt, ist es bevorzugt, dass die genannten Werte für die Radien im Zusammenhang mit der Ellipse für einen Kreis gelten, der die meisten Punkte mit dem genannten Teil der Ellipse gemeinsam hat. Alternativ können die bevorzugten Radien-Werte für die Länge der kleinen Halbachse der Ellipse gelten.

Mit anderen Worten sind die Positionen der Gelenke (oder der durch sie definierten Drehachsen), die Längen der (vorzugsweise starren) Verbindungen zwischen den Gelenken und die Verbindungspunkte mit der Fussauflage bzw. der (ersten) Aufnahme so gewählt, dass sich die oben erwähnte elliptische bzw. kreisförmige Bahn ergibt.

Die Bewegung der Fussauflage kann geführt oder frei sein, wobei eine freie Beweglichkeit bevorzugt ist.

Wenn davon die Rede ist, dass etwas (in Fusslängsrichtung) hinter oder vor bzw. auf der hinteren oder vorderen Seite der Aufnahme angeordnet ist, so wird dabei auf das Pedal bzw. den Pedalkörper Bezug genommen wie es bzw. er im montierten Zustand des Pedals (z.B. an einem Fahrrad) angeordnet ist. Dabei ist vorzugsweise dessen Position bei aufgesetztem Fuss und horizontal ausgerichteter Fussauflage gemeint. Alternativ zur Aufnahme kann bei entsprechenden Angaben auch die Pedalachse gemeint sein, soweit das sinnvoll ist.

Weiterhin ist es bevorzugt, wenn das Koppelgetriebe ein, zwei, drei, vier, fünf, sechs oder mehr Gelenke aufweist, wobei ein Maximum von 20,16,12 oder 10 Gelenken vorteilhaft ist. Besonders bevorzugt sind vier Gelenke.

In Bezug auf die Anzahl Gelenke ist bevorzugt die Anzahl der durch die Gelenke definierten (vorzugsweise durch die jeweiligen Gelenke verlaufenden) Drehachsen gemeint. Entsprechendes gilt bevorzugt auch für Angaben zur Position von Gelenken und zum Abstand zwischen Gelenken. Das heisst, es seien jeweils beide Bedeutungsvarianten "Gelenk" und "Drehachse" offenbart, soweit dies sinnvoll ist.

Mit Vorteil sind ein erstes und ein zweites Gelenk über einen ersten Arm verbunden und ein drittes und ein viertes Gelenk sind über einen zweiten Arm verbunden. Das erste und das dritte Gelenk sind dabei vorzugsweise an der Aufnahme befestigt, während das zweite und das vierte Gelenk bevorzugt an der Fussauflage befestigt sind.

Es kann auch vorteilhaft sein, wenn der Abstand zwischen einem, zwei, drei, vier, fünf oder sechs verschiedenen Paaren von Drehachsen, welche durch Gelenke definiert werden (vgl.oben), konstant ist. Besonders bevorzugt ist hierbei ein konstanter Abstand zwischen vier Paaren von Drehachsen.

Beim Koppelgetriebe handelt es sich hier vorzugsweise um eine Viergelenkkette und insbesondere um ein einfaches Viergelenk. Natürlich sind aber auch andere Koppelgetriebe möglich, denn mittels Koppelgetriebe lassen sich Bewegungsbahnen sehr flexibel festlegen.

Ist das Koppelgetriebe ein Viergelenk mit oben genannten zwei Armen, so kann dadurch eine elliptische Bahn definiert werden, deren Krümmung derjenigen einer Kreisbahn mit wesentlich grösserem Radius angenähert ist. Dadurch lässt sich ein virtuelles Drehzentrum im Bereich der Fußwurzel schaffen, das weiter von der Pedalachse entfernt ist, was eine geringere Baugrösse des Pedals ermöglicht. Ausserdem ist eine elliptische Bahn besser auf den menschlichen Bewegungsapparat angepasst als eine Kreisbahn.

Vorzugsweise sind die beiden genannten Arme gekrümmt und zwar mit Vorteil C-förmig oder im Wesentlichen C-förmig.

Nach einer vorteilhaften Ausgestaltung ist der zweite Arm kürzer als der erste Arm. Insbesondere ist der Abstand zwischen dem ersten und dem zweiten Gelenk grösser als der Abstand zwischen dem dritten und dem vierten Gelenk, wobei der genannte grössere Abstand vorzugsweise mindestens 103%, 110% oder 120% und bevorzugt höchstens 180%, 160% oder 150% des kleineren Abstands beträgt.

Der zweite Arm dient in dieser Ausführungsform unter Anderem dazu, die Länge des Weges festzulegen, welcher durch die Fussauflage; zurückgelegt werden kann. Ausserdem kann durch die zusätzlichen Gelenke und die Abstimmung der Gelenkabstände die Form der Bewegungsbahn bestimmt werden. Wie erwähnt handelt es sich dabei vorzugsweise um einen Kreisbogen bzw. einen Teil einer Ellipse.

Die Arme sind mit Vorteil austauschbar. Dadurch kann das Pedal in einfacher Weise auf verschiedene Fussgrössen angepasst werden, denn die Länge der Arme definiert den Radius der oben genannten Kreisbahn bzw. Ellipse. Somit erlaubt es die Verwendung eines Koppelgetriebes, das Pedal exakt auf die individuellen Bedürfnisse des Benutzers anzupassen und zwar mit einfachen Mitteln.

Es ist also bevorzugt, wenn die Arme austauschbar sind und/oder wenn sie lösbar mit dem Pedal und/oder den Gelenken verbunden sind.

Nach einer weiteren bevorzugten Ausgestaltungsform zeichnet sich das Pedal dadurch aus, dass ein Teil der Gelenke auf einer Seite und ein anderer Teil der Gelenke auf der anderen Seite der Aufnahme angeordnet sind. Insbesondere können das erste und das dritte Gelenk auf einer Seite der Aufnahme positioniert sein, und das zweite und das vierte Gelenk können auf der anderen Seite der Aufnahme positioniert sein. Mit Vorteil sind das erste und das dritte Gelenk in Fusslängsrichtung auf der hinteren Seite der Aufnahme angeordnet und/oder das zweite und das vierte Gelenk sind in Fusslängsrichtung vor der Aufnahme angeordnet.

Das Koppelgetriebe definiert mit Vorteil eine Bewegungsbahn der Fussauflage (insbesondere relativ zur Aufnahme), welche Bewegungsbahn in einer Ebene liegt, die in einem Winkel von 20° bis 70°, vorzugsweise 25° bis 60° und insbesondere 30° bis 50° zur Fussauflage angeordnet ist. Der genannte Winkel ist mit Vorteil konstant. Mit Vorteil bewegen sich die Punkte der Fussauflage also in parallelen Ebenen, welche im oben genannten Winkeln zur Fussauflage bzw. zur Ebene, welche durch die Fussauflage definiert wird, angeordnet sind.

Eine orthogonale Projektion der Bewegungsbahn auf die durch die Fussauflage definierte Ebene ergibt mit Vorteil eine Kurve in Form eines Kreisbogens oder eines Teils einer Ellipse, wobei der Mittelpunktswinkel vorzugsweise 5° bis 20° und insbesondere 8° bis 12° beträgt.

Eine orthogonale Projektion der Bewegungsbahn auf eine Ebene, in welcher die Pedalachse liegt und die rechtwinklig zur durch die Fussauflage definierten Ebene angeordnet ist, ergibt mit Vorteil eine Kurve in Form eines Kreisbogens oder eines Teils einer Ellipse, wobei der Mittelpunktswinkel vorzugsweise 4° bis 8° und insbesondere 3°bis 15° beträgt.

Der oben genannte Mittelpunkt liegt bevorzugt in einem Abstand von 3 bis 12 cm und insbesondere 6 bis 9 cm von der Ebene, welche durch den rotierenden Tretkurbelarm definiert wird. Dabei handelt es sich mit Vorteil um die Ebene, in welcher sich der dem Pedal am nächsten liegende Punkt des Tretkurbelarms während der Rotation des Tretkurbelarms bewegt.

Da die Bewegungsbahn der Fussauflage mit Vorteil nur einen Teil eines Kreises (Kreisbogen) bzw. einen Teil einer Ellipse darstellt, ist es bevorzugt, dass die genannten Werte für die Mittelpunktswinkel im Zusammenhang mit der Ellipse für einen Kreis gelten, der die meisten Punkte mit dem genannten Teil der Ellipse gemeinsam hat.

Diese Ausgestaltungsform erlaubt nicht nur eine Bewegung in einer horizontalen und einer vertikalen Ebene, sondern erstmals eine biomechanisch vorteilhafte mehrdimensionale Kinematik der Füße und damit des gesamten Beines. Die Streckung und Beugung des Knies ist mit Bewegungen des Fusses gekoppelt. Wie weiter oben beschrieben wurde, finden sowohl eine longitudinale Rotation zwischen Ober -und Unterschenkel, d.h. die sogenannte tibio-femorale Rotation (Schwenkbewegung), als auch eine Supination in Kombination mit einer Dorsalextension (Inversion) bzw. eine Pronation in Kombination mit einer Plantarflexion (Eversion) des jeweiligen Fußes (Schaukelbewegung) statt.

Das heisst, der Fuss führt nicht nur eine Drehbewegung um die Pedalachse aus, wie es bei einfachen konventionellen Pedalen üblich ist, sondern nun auch eine Schwenkbewegung, die mit der oben genannten Anordnung der Fussauflage relativ zur Bewegungsbahn der Fussauflage nachempfunden werden kann. Wenn die Bewegungsbahn nicht mehr in der Ebene der Fussauflage; liegt, sondern in einem Winkel dazu angeordnet ist, bzw. dies konstruktiv so gestaltet wurde, so kann der Fuß respektive die Füße beim Radfahren neben der üblichen Drehung um die Pedalachse, durch die Kombination von Schwenk-und Schaukelbewegung eine komplexe Schwenk-Schaukelbewegung ausführen, die ideal dem natürlichen (physiologischen) Bewegungsmuster der Füße entspricht.

Diese Konstruktion erlaubt somit nicht nur eine bedarfsgerechte natürliche Postionierung der Füße, sondern, infolge der resultierenden Arbeit der Füße gegen Schwerkraft bei der Schwenk-Schaukelbewegung, gleichzeitig optimale Bewegungsstabilität bei optimaler Bewegungsmobilität. So können sich beide Füße abhängig von der jeweiligen Stellung des Tretkurbelarmes beim Radfahren in der biomechanischen Optimalposition einrichten. Es ist somit ein gleichmässiger, symmetrischer und vor allem natürlicher Bewegungsablauf in Bezug auf beide Füsse gewährleistet, der übliche Fehlbelastungsschäden verhindert und eine effektive Leistung bewirkt.

Von Vorteil ist im Allgemein ein Pedal mit
- einer ersten Aufnahme für eine erste Achse (insbesondere zur drehbaren Verbindung mit einer Tretkurbel), welche eine erste Drehachse definiert, und
- einer Fussauflage, welche Fussauflage eine Ebene definiert.

Die erste Aufnahme und die Fussauflage sind hierbei mittels einer zweiten Achse drehbar verbunden, welche zweite Achse eine zweite Drehachse definiert. Ausserdem ist die zweite Achse bei dieser Variante in einem (vorzugsweise konstanten) Winkel von 20° bis 70°, vorzugsweise 30° bis 65° und insbesondere 40° bis 60° zur Fussauflage angeordnet. Die zweite Drehachse schneidet die Ebene also mit Vorteil im genannten Winkel.

Die Achsen definieren somit eine Bewegungsbahn der Fussauflage (insbesondere relativ zur Aufnahmen), welche Bewegungsbahn in einer Ebene liegt, die in einem Winkel von 20° bis 70°, vorzugsweise 25° bis 60° und insbesondere 30° bis 50° zur Fussauflage angeordnet ist (Komplementärwinkel, denn die Drehachse steht senkrecht auf der Bewegungsebene).

Statt um Achsen kann es sich auch um Gelenke oder allgemein um zwei drehbar gekoppelte Verbindungsglieder oder Verbindungselemente handeln (z.B. Achse und Achsenaufnahme, allgemein Vertikallager oder Vertikalschräglager senkrechte Kugellager, Wälzlager, etc.), wobei diese jeweils eine Drehbewegung um eine Drehachse erlauben und somit eine Drehachse definieren. Die Angaben zur Position der Achsen sind dann so auszulegen, dass die von den drehbar gekoppelten Verbindungsgliedern oder Gelenken definierten Drehachsen entsprechend positioniert sind, also beispielsweise in einem Winkel von 20° bis 70° zur Fussauflage. Entsprechendes gilt für die folgenden Ausführungen. Vorzugsweise verläuft die genannte Drehachse jeweils durch eines der zwei Verbindungsglieder bzw. durch das Gelenk, welches diese Drehachse definiert. Die Gelenke können aber natürlich noch zusätzliche virtuelle Drehachsen definieren, die im Abstand zu den Verbindungselementen bzw. Gelenken und insbesondere im Fußwurzelbereich angeordnet sind.

Die erste Aufnahme und die Fussauflage sind mit Vorzug mittels der zweiten und mittels einer dritten Achse drehbar verbunden.

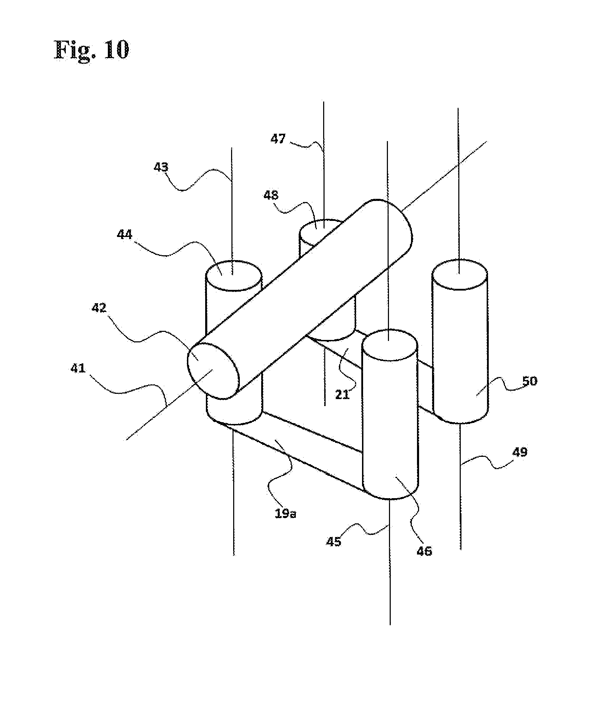

Zur Vereinfachung des Verständnisses können bei den nachfolgenden Ausführungen die zweite, dritte, vierte bzw. fünfte Achse mit dem ersten, zweiten, dritten bzw. vierten Gelenk (bzw. mit den durch die Gelenke definierten Drehachsen), wie sie weiter oben beschrieben wurden, gleichgesetzt werden. Dies stellt zwar eine bevorzugte Ausgestaltungsvariante dar, die Erfindung ist aber nicht auf diesen Zusammenhang beschränkt. Ausserdem sei auf die Fig.10 verwiesen, die den Sachverhalt beispielhaft darstellt.

Es kann bevorzugt sein, wenn die erste Aufnahme mit der zweiten Achse drehbar verbunden ist, die Fussauflage mit der dritten Achse drehbar verbunden ist, und die zweite und die dritte Achse über/durch einen ersten Arm verbunden sind. Die zweite und die dritte Achse sind dabei vorzugsweise parallel.

Nach einer weiteren bevorzugten Ausgestaltungsvariante des genannten Pedals kann die erste Aufnahme mit einer vierten Achse drehbar verbunden sein. Die Fussauflage ist dann mit einer fünften Achse drehbar verbunden, während die vierte und die fünfte Achse über/durch einen zweiten Arm verbunden sind. Die vierte und die fünfte Achse sind mit Vorteil parallel.

Bevorzugt sind zumindest die zweite und die vierte und/oder die die dritte und die fünfte Achse parallel. Nach einer besonders bevorzugten Ausgestaltungsvariante sind die zweite, dritte, vierte und fünfte Achse parallel.

Weiterhin kann sich das genannte Pedal dadurch auszeichnen, dass die erste Aufnahme zwischen der Fussauflage und dem ersten (und/oder zweiten) Arm angeordnet ist. Dies führt zu einer kompakten Bauweise, was bei Pedalen von Bedeutung ist. Ausserdem kann es vorteilhaft sein, wenn der zweite Arm kürzer ist als der erste Arm (zu den Gründen, vgl. oben).

Gemäss einer weiteren vorteilhaften Ausgestaltungsform des genannten Pedals sind die Aufnahmen für die zweite und die vierte Achse an der ersten Aufnahme befestigt, während die Aufnahmen für die dritte und die fünfte Achse an der Fussauflage befestigt sind.

Die Verbindung zwischen der ersten Aufnahme und der Fussauflage (d.h. die die Verbindung herstellenden Elemente wie Achsen etc.) greift mit Vorteil im hinteren Bereich (bezüglich der Fusslängsrichtung) der ersten Aufnahme und im vorderen Bereich der Fussauflage an bzw. ist dort befestigt.

In Bezug auf die Ausrichtung der zweiten Achse bzw. des ersten Gelenks ist es bevorzugt, wenn gilt: Eine Ebene A, welche durch die erste Drehachse (Pedalachse) und die kürzeste Verbindungsstrecke zwischen der ersten und der zweiten Drehachse definiert ist (d.h. diese enthält) und eine Ebene B, welche durch die zweite Drehachse und die kürzeste Verbindungsstrecke zwischen der ersten und der zweiten Drehachse definiert ist (d.h. diese enthält), in einem Winkel von 70° bis 90°, vorzugsweise 80° bis 90° zueinander angeordnet sind.

### Kurze Beschreibung der Zeichnungen

Es zeigen in schematischer, nicht massstabsgetreuer Darstellung:
Fig.1 eine perspektivische Ansicht eines Tretkurbelarmes mit montiertem Pedal ohne Fussauflage;
Fig. 2 eine weitere perspektivische Ansicht eines Tretkurbelarmes mit montiertem Pedal ohne Fussauflage;
Fig. 3 eine weitere perspektivische Ansicht eines Tretkurbelarmes mit montiertem Pedal ohne Fussauflage;
Fig. 4 eine perspektivische Ansicht einer Fussauflage;
Fig. 5 eine Draufsicht auf eine Fussauflage;
Fig. 6 eine Seitenansicht einer Fussauflage;
Fig. 7 eine perspektivische Ansicht des ersten Arms;
Fig. 8 eine perspektivische Ansicht des zweiten Arms;
Fig. 9 verschiedene Darstellungen des Tretkurbelarms und des Pedals am oberen Totpunkt (PLO), am unteren Totpunkt (PLU) und bei waagrechter Stellung der Fussauflage relativ zur Tretkurbel (PLW); und
Fig.10 eine perspektivische Ansicht des Pedals ohne Fussauflage.

### Ausführung der Erfindung

Die Erfindung wird nachfolgend anhand der Zeichnungen beispielhaft erläutert.

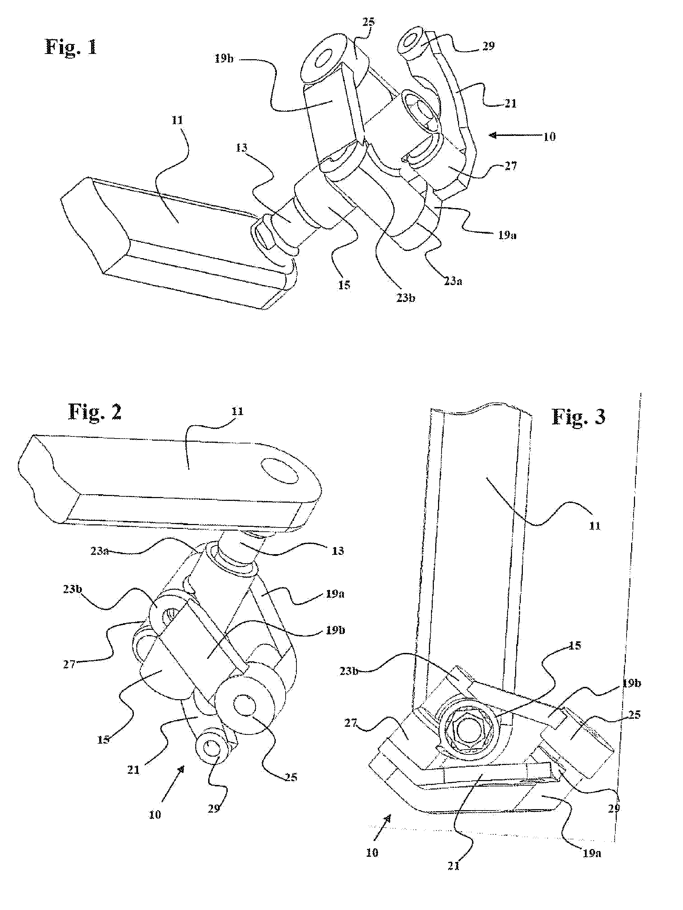

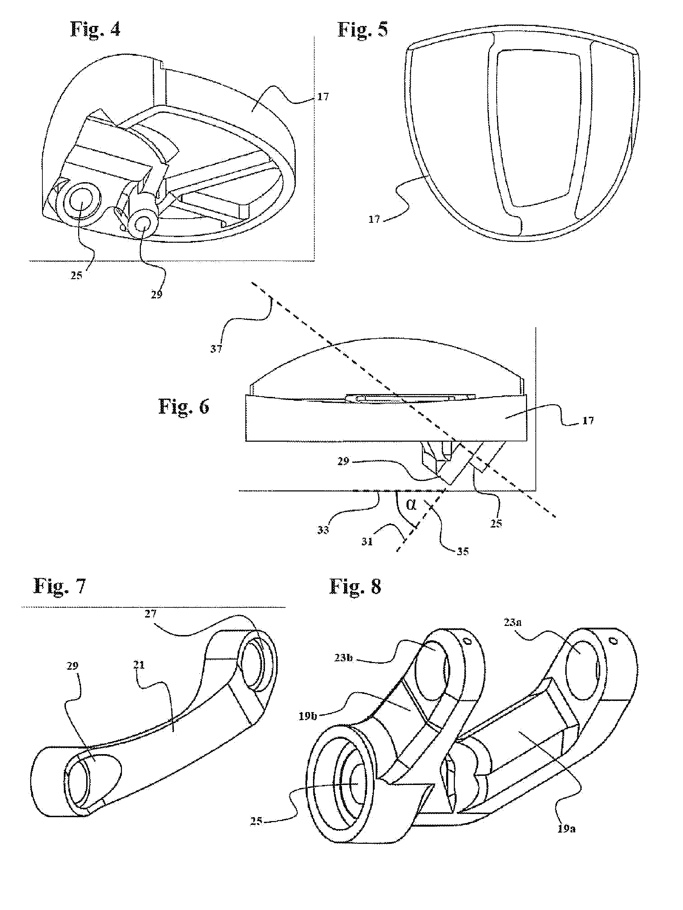

Die Fig.1, 2 und 3 zeigen einen Tretkurbelarm 11, welcher über eine Achse 13 mit der Aufnahme 15 des Pedals verbunden ist. Das Pedal 10 weist neben der Aufnahme 15 zwei Arme 19a/b und 21 auf, welche als Verbindungen zwischen der Aufnahme 15 und einer nicht dargestellten Fußauflage dienen. In diesem Beispiel sind der erste Arm 19a, 19b als auch das erste Gelenk 23a, 23b zweiteilig ausgebildet. Der obere Teil des ersten Arms 19b umfasst (i.S.v. "umgreift") die Aufnahme 15 auf der oberen (der Fussauflage näheren) Seite, während der untere Teil des Arms 19a die Aufnahme 15 auf der unteren Seite umfasst. Der untere Teil 19a ist über den unteren Teil eines erstes Gelenks 23a mit der Aufnahme 15 verbunden, während der obere Teil 19b über den oberen Teil des ersten Gelenks 23b an der Aufnahme 15 befestigt ist. Am Übergang vom ersten (unteren) Steil 19a zum zweiten (oberen) Teil 19b des ersten Arms ist ein zweites Gelenk 25 zur Befestigung an der Fussauflage vorgesehen. Das erste Gelenk 23a, 23b kann wie in diesem Beispiel aus einer Achse und einer Achsenaufnahme bestehen, welche in einem Winkel bzw. quer zur Aufnahme 15 angeordnet ist. Das obere bzw. untere Ende der Achse bildet in diesem Fall den oberen 23b bzw. unteren 23a Teil des ersten Gelenks. Es ist jedoch auch möglich, auf den oberen, der Verstärkung dienenden Teil des ersten Arms 19b sowie den oberen Teil des ersten Gelenks 23b zu verzichten oder eine andere Art von Gelenk vorzusehen, welches eine Drehbewegung erlaubt. Möglich wären z.B. Wälzlager, insbesondere Vertikalschräglager oder Tonnenlager. Der Vorteil solcher Vertikallager ist ihre geringe Verschmutzungsanfälligkeit. In diesem Beispiel ist ein zweiter Arm 21 vorgesehen, welcher über ein drittes Gelenk 27 mit der Aufnahme 15 verbunden ist und ein weiteres (viertes) Gelenk 29 zur Verbindung mit der Fussauflage aufweist. Eine isolierte Betrachtung der beiden Arme 19, 21 wird durch die Fig.7 und 8 ermöglicht.

Die Fussauflage 17 ist in den Fig. 4 bis 6 dargestellt. Wie den Fig.4 und 6 zu entnehmen ist, sind das zweite Gelenk 25 und das vierte Gelenk 29 derart angeordnet, dass sich ein Winkel "α" 35 zwischen den durch die Gelenke definierten Drehachsen und der durch die Fussauflage definierten Ebene ergibt (eine zur Fussauflage parallele Ebene 33 und eine zu den Drehachsen parallele Gerade 31 sind eingezeichnet). Der resultierende Bewegungspfad liegt demnach in einer Ebene, die in einem Winkel zur Fussauflage angeordnet ist. In der Fig.6 ist beispielhaft eine der Bewegungsebene 37 eingezeichnet. Die Punkte der Fussauflage bewegen sich in dazu parallelen Ebenen auf Kurvenbahnen, welche durch die Konstruktion der Gelenke definiert sind. Optimal ist hierbei eine Kreisbahn oder eine elliptische Bahn. Die Kurve selbst stellt in diesem Beispiel einen Teil einer Ellipse dar, was durch die Verwendung zweier unterschiedlich langer Arme 19 und 21 bedingt ist. Somit kann der Fuss während der Benutzung der Vorrichtung auch die Bewegungsmuster Inversion und Eversion ausführen.

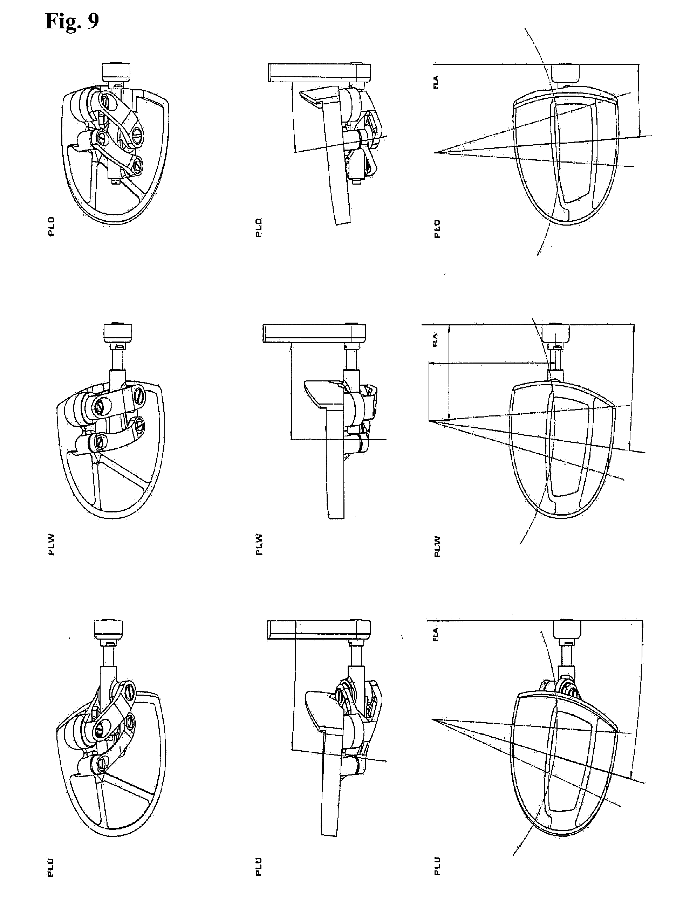

Die Bewegungsmuster sind in Fig.9 (Funktionsmodell) genauer dargestellt, wobei aus Gründen der Übersichtlichkeit auf Bezugszeichen verzichtet wurde. Die mit "PLU" bezeichneten Abbildungen stellen die mögliche Position des Pedals (aus unterschiedlichen Perspektiven) am unteren Totpunkt des Tretkurbelarmes dar, d.h. am (bezüglich des Fusses) äussersten Punkt der Bewegungsbahn. Die Abkürzung "PLW*"* bezeichnet entsprechend die Abbildung, in denen die Fussauflage; waagrecht angeordnet ist, während die verbleibenden Abbildungen mit dem Vermerk "PLO*"* versehen sind. Letzterer beschreibt die mögliche Position am oberen Totpunkt des Tretkurbelarmes, d.h. am (bezüglich des Fusses) innersten bzw. der Tretkurbel nächsten Punkt der Bewegungsbahn. ("FLA" ist die Fahrradlängsachse).

Die Fig.10 zeigt das Pedal ohne Fussauflage in abstrakter Form. Die Zeichnung soll das Verständnis des zweiten Teils der Anmeldung erleichtern, in welchem die Vorrichtung anhand von Achsen statt anhand von Gelenken definiert ist.

### Bezugszeichenliste:

- 10: Pedal (Fussauflage nicht gezeigt)
- 11: Tretkurbelarm (rechts in Fahrtrichtung)
- 13: Achse (übliche Pedalachse)
- 15: Basis (hier: Aufnahme für Achse 13)
- 17: Fussauflage
- 19a: erster Arm (unten)
- 19b: erster Arm (oben)
- 21: zweiter Arm
- 23a: erstes Gelenk (unten)
- 23b: erstes Gelenk (oben)
- 25: zweites Gelenk
- 27: drittes Gelenk
- 29: viertes Gelenk
- 31: Gerade parallel zu den Drehachsen
- 33: Ebene parallel zur Fussauflagefläche
- 35: Winkel a zwischen Drehachse und Fussauflagefläche
- 37: Ebene parallel zur Bewegungsebene
- 41: erste Achse / erste Drehachse
- 42: erste Aufnahme (analog zu 15)
- 43: zweite Achse / zweite Drehachse
- 44: zweite Aufnahme
- 45: dritte Achse / dritte Drehachse
- 46: dritte Aufnahme
- 47: vierte Achse / vierte Drehachse
- 48: vierte Aufnahme
- 49: fünfte Achse / fünfte Drehachse
- 50: fünfte Aufnahme

## Patentansprüche

1. Pedal (10) mit:
- einer Basis (15) und
- einer Fussauflage (17),
**dadurch gekennzeichnet, dass** die Fussauflage (17) mittels eines Koppelgetriebes (23a, 23b, 25,27,29,19a, 19b, 21) mit der Basis (15) verbunden ist.

2. Pedal nach Anspruch 1, **dadurch gekennzeichnet, dass** das Koppelgetriebe (23a, 23b, 25, 27, 29,19a, 19b, 21) mindestens vier Gelenke (23a, 23b, 25, 27, 29) aufweist, wobei
- ein erstes und ein zweites Gelenk (23a, 23b und 25) über einen ersten Arm (19a, 19b) verbunden sind,
- ein drittes und ein viertes Gelenk (27 und 29) über einen zweiten Arm (21) verbunden sind,
- das erste und das dritte Gelenk (23a, 23b und 27) an der Basis (15) befestigt sind, und
- das zweite und das vierte Gelenk (25 und 29) an der Fussauflage (17) befestigt sind.

3. Pedal nach Anspruch 2, **dadurch gekennzeichnet, dass** der zweite Arm (21) kürzer ist als der erste Arm (19a, 19b).

4. Pedal nach einem der Ansprüche 2 oder 3, **dadurch gekennzeichnet, dass** das erste und das dritte Gelenk (23a, 23b und 27) auf einer Seite der Basis (15) positioniert sind und dass das zweite und das vierte Gelenk (25 und 29) auf der anderen Seite der Basis (15) positioniert sind, wobei das erste und das dritte Gelenk (23a, 23b und 27) vorzugsweise in Fusslängsrichtung auf der hinteren Seite der Basis (15) angeordnet sind.

5. Pedal, nach einem der vorangehenden Ansprüche, **dadurch gekennzeichnet, dass** das Koppelgetriebe (23a, 23b, 25,27,29,19a,19b, 21) eine Bewegungsbahn der Fussauflage (17) relativ zur Basis (15) definiert, welche Bewegungsbahn in einer Ebene (37) liegt, die in einem Winkel von 20° bis 70° zur Fussauflage (17) angeordnet ist.

6. Pedal nach einem der vorangehenden Ansprüche, **dadurch gekennzeichnet, dass** das Koppelgetriebe (23a, 23b, 25, 27, 29, 19a, 19b, 21) eine kreisförmige oder elliptische Bewegungsbahn der Fussauflage (17) relativ zur Basis (15) definiert, wobei der Mittelpunkt des Kreises oder der Ellipse vorzugsweise in Fusslängsrichtung auf der hinteren Seite der Basis (15) und besonders bevorzugt im Bereich der hinteren Fusswurzel angeordnet ist.

7. Pedal mit:
- einer Basis, bei der es sich vorzugsweise um eine erste Aufnahme (42) für eine erste Achse (41) handelt, und
- einer Fussauflage,
wobei die Basis (42) und die Fussauflage mittels einer zweiten Achse (43) drehbar verbunden sind,
**dadurch gekennzeichnet, dass**
die zweite Achse (43) in einem Winkel von 20° bis 70° zur Fussauflage angeordnet ist.

8. Pedal nach Anspruch 7, **dadurch gekennzeichnet, dass** die Basis (42) und die Fussauflage mittels der zweiten und mittels einer dritten Achse (43 und 45) drehbar verbunden sind.

9. Pedal nach Anspruch 8, **dadurch gekennzeichnet, dass**
- die Basis (42) mit der zweiten Achse (43) drehbar verbunden ist,
- die Fussauflage mit der dritten Achse (45) drehbar verbunden ist, und
- die zweite und die dritte Achse (43 und 45) über einen ersten Arm (19a) verbunden sind,
wobei die zweite und die dritte Achse (43 und 45) vorzugsweise parallel sind.

10. Pedal nach Anspruch 9, **dadurch gekennzeichnet, dass**
- die Basis (42) mit einer vierten Achse (47) drehbar verbunden ist,
- die Fussauflage mit einer fünften Achse (49) drehbar verbunden ist, und
- die vierte und die fünfte Achse (47 und 49) über einen zweiten Arm (21) verbunden sind,
wobei die vierte und die fünfte Achse (47 und 49) vorzugsweise parallel sind:

11. Pedal nach Anspruch 10, **dadurch gekennzeichnet, dass** der zweite Arm (21) kürzer ist als der erste Arm (19a).

12. Pedal nach einem der Ansprüche 10 oder 11, **dadurch gekennzeichnet, dass** die zweite, dritte, vierte und fünfte Achse (43,45 47,49) parallel sind.

13. Pedal nach einem der Ansprüche 10 bis 12, **dadurch gekennzeichnet, dass** die Aufnahmen (44,48) für die zweite und die vierte Achse (43 und 47) an der Basis (42) befestigt sind und dass die Aufnahmen (46, 50) für die dritte und die fünfte Achse (45 und 49) an der Fussauflage befestigt sind.

14. Pedal nach einem der Ansprüche 7 bis 13, **dadurch gekennzeichnet, dass** die Verbindung (43, 44, 45, 46, 47, 48, 49, 50, 19a, 21) zwischen der Basis (42) und der Fussauflage im hinteren Bereich der Basis (42) und im vorderen Bereich der Fussauflage angreift.

15. Gerät, welches durch Beugen und Strecken der Beine bedient und/oder angetrieben wird und ein Pedal (10) nach einem der vorangehenden Ansprüche aufweist, wobei es sich beim Gerät vorzugsweise um ein Therapiegerät, Rehabilitationsgerät, Fitnessgerät oder Fortbewegungsmittel und insbesondere um ein Fahrrad oder einen Ergometer handelt.
